# EUROPÄISCHE PATENTANMELDUNG

(11) **EP 1 031 819 A1**
(43) Veröffentlichungstag der Anmeldung: **30.08.2000**
(21) Anmeldenummer: 99103435.6
(22) Anmeldetag: 23.02.1999
(51) Int. Cl.: G01F 1/06, G01F 1/07

(54) **Wasserzähler**

(71) Anmelder: Körner, Hans-Holger, 23758 Oldenburg in Holstein (DE)
(72) Erfinder: Körner, Hans-Holger, 23758 Oldenburg in Holstein (DE)
(74) Vertreter: Glawe, Delfs, Moll & Partner

(57) **Zusammenfassung**

Wasserzähler mit einem das Meßsignal als Umdrehung einer Welle (32) abgebenden Meßwerk, einem sich an die Welle (32) anschließenden Getriebe (28), das sich in einer von Medium und Mediumsdruck beaufschlagten Getriebekammer (27) befindet, und einem Anzeigewerk (41), das sich in einer von der Getriebekammer (27) durch eine Wand (26) dicht getrennten Anzeigekammer (40) befindet und von dem Getriebe (28) über eine exzentrisch gelegene, abgedichtete Antriebsverbindung (53,54) angetrieben ist. Um das Anzeigewerk (41) gegenüber dem Meßwerksgehäuse (1) mit geringem Reibwiderstand verdrehen zu können, ist vorgesehen, daß dem Anzeigewerk (41) in der Anzeigekammer (40) mindestens ein mittennah gelagertes Zwischenrad (60,63) vorgeschaltet ist und die Haube (21) der Anzeigekammer (40) mit dem Anzeigewerk (41) gegenüber der Getriebekammer (27) um eine Achse drehverstellbar ist, die mit der Achse des Zwischenrads (60,63) zusammenfällt. Die Anzeigekammer (40) ist zweckmäßigerweise trocken und drucklos ausgebildet.

## Beschreibung

Die Erfindung betrifft einen Wasserzähler der im Oberbegriff des Anspruchs 1 genannten Art, wie sie aus offenkundiger Vorbenutzung bekannt sind. Eingeschlossen sind Wasserzähler als Teil eines Wärmezählers.

Der bekannte Wasserzähler besitzt ein Meßwerk, das das Meßsignal als Umdrehung einer Welle an ein sich anschließendes Getriebe abgibt, das sich in einer von Medium und Mediumsdruck beaufschlagten Getriebekammer befindet. Diese ist durch eine Wand von einer Anzeigekammer getrennt, die eine abgedichtete Wellendurchführung für die letzte Getriebewelle zum Antrieb des Anzeigewerks enthält. Damit diese Wellendurchführung nicht gegenüber dem vollen Mediumsdruck abdichten muß, was zu einem zu hohen Reibmoment führen würde, ist die Anzeigekammer mit einer Schutzflüssigkeit gefüllt und gleichfalls von Mediumsdruck beaufschlagt. Die Wellendurchführung braucht daher nur die Schutzflüssigkeit von dem in der Getriebekammer befindlichen Wasser zu trennen.

Das Anzeigewerk eines Wasserzählers muß gegenüber dem Meßgehäuse verdrehbar sein, damit es unabhängig von der Einbausituation in eine Drehstellung gebracht werden kann, in der es bequem ablesbar ist. Diese Verdrehung ist bei dem bekannten Zähler schwierig zu bewerkstelligen, weil sie gegen den Reibwiderstand einer Dichtung stattfinden muß, durch die das Zähl- und das Meßwerk gegen den Mediumsdruck gegenüber der Atmosphäre abgedichtet sind.

Der Erfindung liegt die Aufgabe zugrunde, bei einem Wasserzähler der im Oberbegriff des Anspruchs 1 genannten Art trotz einfachem Aufbau die Dreheinstellung des Anzeigewerks zu erleichtern.

Die erfindungsgemäße Lösung besteht in den Merkmalen des Anspruchs 1 und vorzugsweise denjenigen der Unteransprüche. Demgemäß ist vorgesehen, daß dem Anzeigewerk in der Anzeigekammer mindestens ein mittennah gelagertes Zwischenrad vorgeschaltet ist und die Haube der Anzeigekammer mit dem Anzeigewerk gegenüber der Getriebekammer um eine Achse drehverstellbar ist, die mit der Achse des Zwischenrads zusammenfällt. Dadurch wird die Drehstellung des Anzeigewerks unabhängig von der Drehstellung der exzentrischen Antriebsverbindung zwischen der Getriebekammer und der Anzeigekammer. Das Getriebe, die Getriebekammer und die Wand zwischen Getriebekammer und Anzeigekammer können ihre Drehstellung beibehalten, wenn die Haube mit dem Anzeigewerk verdreht wird.

Wenn nach einem weiteren Erfindungsmerkmal die Anzeigekammer trocken und drucklos ausgebildet ist, kann auf eine dem Mediumsdruck standhaltende Dichtung verzichtet werden, so daß die Verdrehung ohne wesentlichen Dichtungswiderstand geschehen kann. Ermöglicht wird die drucklose Ausbildung der Anzeigekammer dadurch, daß die Wand zwischen der Getriebekammer und der Anzeigekammer druckfest ausgebildet ist. Um die Antriebsverbindung durch diese Wand hindurch unabhängig zu machen von den Reibkräften einer Dichtung, ist dafür zweckmäßigerweise eine Magnetkupplung vorgesehen.

Neben der unabhängigen Verdrehbarkeit des Anzeigewerks hat die Erfindung den Vorteil, daß die Wiederverwendbarkeit des Zählwerks erleichtert wird, weil es keine Elemente enthält, bei denen maßgeblicher Verschleiß oder eine die Funktion beeinträchtigende, schwer zu beseitigende Verschmutzung befürchtet werden muß. Wenn eine Reinigung überhaupt erforderlich ist, genügt im allgemeinen ein Reinigungsbad, gegebenenfalls ohne vorherige Demontage des Zählwerks.

Die Erfindung ermöglicht auch die Rückstellung des Zählwerks auf Null im Falle einer neuen Verwendung, wobei lediglich die Haube abgenommen werden muß. Ferner hat sie den Vorteil, daß alle schnell drehenden Räder entfernt von der von außen zugänglichen Haube unterhalb der druckfesten Platte liegen und daher durch mechanischen Druck auf das Zählwerk kein Stillstand des Getriebes erreicht werden kann.

Ferner hat sie den Vorteil, daß in der Anzeigekammer leicht weitere Änderungen vorgenommen werden können, beispielsweise die Einfügung eines Kontaktwerks für die Fernanzeige oder eines Rechenwerks für die Wärmemessung.

Magnetkupplungen sind dafür bekannt, daß sie infolge ihrer beträchtlichen Durchmesser und Massen ein großes Massenträgheitsmoment haben und daher raschen Durchflußveränderungen nur verzögert und damit genauigkeitsbeeinträchtigend folgen. Dieser Nachteil wird bei dem erfindungsgemäßen Einsatz der Magnetkupplung vermieden, weil eine starke Untersetzung vorgeschaltet ist.

Um eine Fernauswertung des Meßergebnisses zu ermöglichen, wird häufig verlangt, daß Durchflußmeßgeräte mit einem entsprechenden Geber ausgerüstet werden. Nach einem besonderen Merkmal der Erfindung, das gegebenenfalls Schutz unabhängig von den Merkmalen der Ansprüche 1 bis 3 verdient, wird ein magnetfeldempfindlicher Geber im magnetischen Wirkungsbereich und vorzugsweise innerhalb der Magnetkupplung angeordnet. Dies ergibt auch die Möglichkeit der passiven Abtastung der Drehung der Kupplung (oder wenigstens eines Kupplungselements), beispielsweise durch ein Reed-Relais.

Die Verwendung der Magnetkupplung zwischen Vorgelege und Anzeigewerk hat den Vorteil, daß sie dank dem verhältnismäßig hohen verfügbaren Drehmoment weniger leicht durch ein von außen einwirkendes Magnetfeld manipulierbar ist. Dies gilt nach einem weiteren Merkmal der Erfindung insbesondere dann, wenn das antreibende Element der Magnetkupplung das angetriebene Element abschirmend umgibt, indem es vorzugsweise topfförmig ausgebildet ist. Es kann so die Abschirmung nicht nur über den Umfang, sondern auch an einer Stirnseite bewirken. An der offenen Seite kann zur Vervollständigung der Abschirmung eine ferromagnetische Scheibe vorgesehen sein, die der leichteren Montage halber von dem angetriebenen Element oder dessen Welle getragen sein kann.

Für die Ausbildung der Magnetkupplung kann die druckfeste Wand eine topfförmige Auswölbung in die Getriebekammer hinein aufweisen, die von dem topfförmigen antreibenden Element umgeben ist und das angetriebene Element umgibt. Sie kann auch die Lagerung für das antreibende Element tragen oder bilden, indem sie mit einem entsprechenden Lagerstift ausgerüstet ist, wobei die axiale Fixierung des antreibenden Elements einerseits durch das Ende des Lagerstifts und andererseits durch eine dem Lagerstift gegenüberliegende Platine gegeben ist.

Die Magnetkupplung kann - wie üblich - mit einem Drehzahlverhältnis von 1:1 wirken. Es ist jedoch auch eine Über- oder Untersetzung möglich, wenn die Polzahlen der ineinanderliegenden Magneträder bzw. Magnettrommeln unterschiedlich gewählt werden und sie exzentrisch zueinander angeordnet sind.

Eine weitere ferromagnetische Abschirmung kann in einem Gehäuse vorgesehen sein, das das Getriebe, die druckfeste Platte sowie mindestens einen Teil der Anzeigekammer einschließt.

Bei den eingangs erwähnten, bekannten Meßgeräten mit mechanischer Wellendurchführung von der Getriebekammer zur Anzeigekammer ist es aus Reibungsgründen notwendig, der Wellendurchführung eine sehr starke Untersetzung vorzuschalten. Dies bedingt, daß die schnelleren Anzeigeräder nicht in den Rollenblock integriert werden können, sondern Teil des Vorgeleges bilden und durch die entsprechend transparent ausgebildete Trennwand zwischen Getriebe- und Anzeigekammer hindurch abgelesen werden müssen. Zwar läßt sich dies auch im Zusammenhang mit der Erfindung anwenden; jedoch gestattet diese es im allgemeinen, darauf gänzlich oder zu einem wesentlichen Teil zugunsten einer bequemeren Ablesung zu verzichten.

Zur Beobachtung der Flügelradbewegung und/oder eines sogenannten Zehntelliterrades können glasklare Beobachtungszapfen vorgesehen sein, die von der druckfesten Platte bzw. von der Haubenoberseite in die Nähe der zu beobachtenden Teile führen. Die diesbezüglichen Ansprüche verdienen gegebenenfalls Schutz unabhängig von den vorgeordneten Ansprüchen.

Wenn das Medium zum Getrieberaum freien Zugang hat und sich dort eine Magnetkupplung befindet, muß man an dieser mit der Ablagerung ferromagnetischer Teilchen rechnen. Dies läßt sich nach der Erfindung dadurch verhindern oder eindämmen, daß sich das antreibende Element der Magnetkupplung in einer Kupplungskammer befindet, die von der übrigen Getriebekammer bis auf einen engen Durchgang abgeteilt ist, der dem Durchgang eines Getriebeelements dient. Der zwischen den Wandungen des Durchgangs und dem Getriebeelement verbleibende Spalt kann besonders gering gehalten werden, wenn der Durchgang als Wellendurchgang ausgebildet ist, der lediglich eine Welle, vorzugsweise in der Form der Wellenlagerung, aufnimmt. Konstruktiv läßt sich dies besonders vorteilhaft dadurch verwirklichen, daß die Welle quer zur Kupplungsachsrichtung verläuft und sich in der Teilung eines Getriebegehäuses befindet. Zweckmäßigerweise handelt es sich dabei um die Welle eines Schneckenrads. Diese Merkmale der Ansprüche 16 bis 20 verdienen gegebenenfalls Schutz unabhängig von den Merkmalen der vorgeordneten Ansprüche.

Die Erfindung wird im folgenden näher unter Bezugnahme auf die Zeichnung erläutert, die vorteilhafte Ausführungsbeispiele veranschaulicht. Es zeigen:
- Fig. 1: einen Schnitt durch eine erste Ausführungsform,
- Fig. 2: einen Schnitt durch eine zweite Ausführungsform entlang der strichpunktierten Linie in Fig. 3 und
- Fig. 3: eine Querschnittsdarstellung.

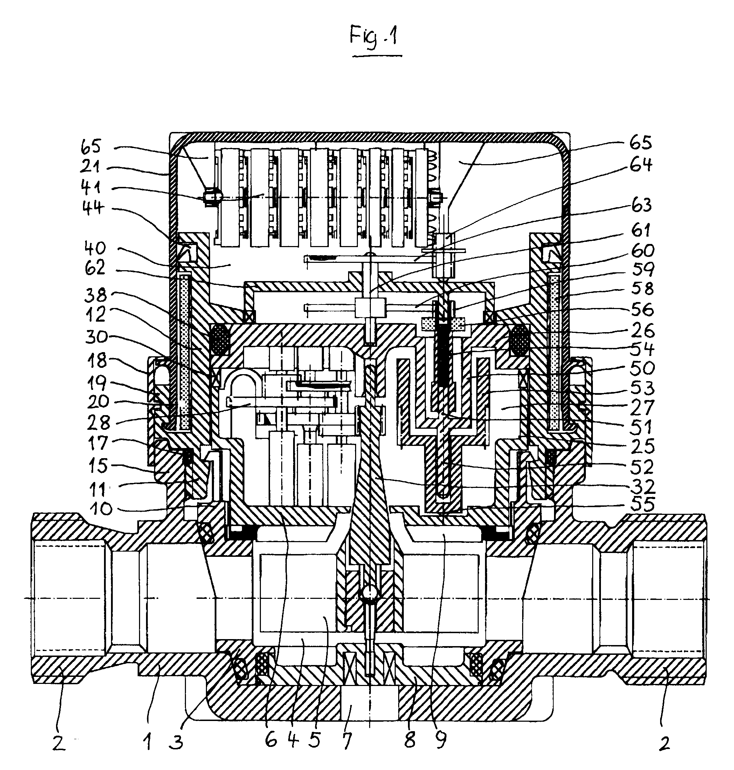

Gemäß Fig. 1 enthält das Meßwerksgehäuse 1 mit Stutzen 2 ein Meßkapselgehäuse 3, das eine Meßkammer 4 mit Flügelrad 5 einschließt, die an der offenen Seite des Kapselgehäuses 3 durch eine Platine 6 geschlossen ist. Bei dem dargestellten Meßwerksgehäuse 1 handelt es sich um ein Prüfstandsgehäuse, das eine Öffnung 7 aufweist, durch die ein Justierboden 8 zugänglich ist. Für den normalen Meßbetrieb wird ein geschlossenes Gehäuse verwendet. Statt des Justierbodens 8 kann zum Justieren des Meßwerks ein mit Justierrippen versehener Einstellring 9 verwendet werden. Zur Erläuterung der übrigen Teile des Meßwerks wird auf den Stand der Technik verwiesen (beispielsweise EP-B 682 234).

Der Rand 10 des Kapselgehäuses 3 ist mit dem Rand 11 eines Zählwerksgehäuses 12 verklammert, das zum Schutz und zur Aufnahme des Zähl- und Anzeigewerks dient. Sein Kragen 19 hält den Rand 20 einer die Kapsel nach oben hin abschließenden, durchsichtigen Haube 21. Gemeinsam bilden diese Teile mit dem Kapselgehäuse 3 die Meßkapsel. Diese wird dadurch am Meßwerksgehäuse 1 befestigt, daß der Gewinderand 15 des Meßwerksgehäuses mit dem Rand 11 des Zählwerksgehäuses 12 unter Einschluß einer Dichtung 17 verschraubt wird. Gesichert werden kann die Verbindung durch einen Plombenring 18.

Im Zählwerksgehäuse 12 ist durch die Platine 6, eine davon sich erhebende Platinenwand 25 und eine der Platine 6 gegenüberliegende Wand 26 die Zählwerkskammer 27 gebildet, die das durch einige Räder 28 angedeutete Zählwerksgetriebe aufnimmt. Die Räder 28 bzw. deren Wellen sind in Lagerpfosten gelagert, die sich von der Platine 6 und der Platte 26 erheben. Damit zur selben Räderwelle gehörige Lagerpfosten 29 miteinander fluchten, sind die Platine 6 und die Platte 26 durch formschlüssigen gegenseitigen Eingriff 30 drehfest miteinander verbunden.

Die mit dem Flügelrad 5 vorzugsweise einstückig verbundene Welle 32 erstreckt sich durch eine mittlere, enge Öffnung der Platine 6 in die Zählwerkskammer 27. Ihr Ende ist dort an der Platte 26 gelagert. Sie steht in Zahneingriff mit dem Getriebe 28.

Die druckfeste Platte 26 ist durch einen Dichtring 38 gegenüber dem Zählwerksgehäuse 12 abgedichtet. Der vom Medium und Mediumsdruck beaufschlagte Raum außerhalb der Meßkammer 4 wird somit von dem Meßwerksgehäuse 12 unterhalb des Dichtrings 38 und der druckfesten Platte 26 begrenzt. Oberhalb derselben befindet sich die Anzeigekammer 40, die ihren Namen dem Anzeigewerk 41 verdankt, das normalerweise (beispielsweise in Gestalt des in Fig. 1 gezeigten Rollenblocks) darin enthalten ist. Jedoch gibt es auch Fälle, in denen dort kein Anzeigewerk vorgesehen ist. Beispielsweise wird darauf mitunter verzichtet bei Fernauswertung des Meßergebnisses oder wenn der Wasserzähler Teil eines Wärmezählers ist. In diesen Fällen kann dort eine elektronische Auswerte- und/oder Übermittlungseinrichtung vorgesehen sein.

Die Anzeigekammer 40 wird von der durchsichtigen Haube 21 geschlossen. Am Umfang ist sie überwiegend durch das Zählwerksgehäuse 12 geschützt. Gewünschtenfalls kann ein Dichtring 44 gegen den Eintritt von Staub und Spritzwasser vorgesehen sein. Dieser Dichtring 44 braucht im allgemeinen lediglich als Staubdichtung mit geringer Dichtpressung und somit geringem Reibwiderstand bei Verdrehung der Haube ausgeführt zu sein. Das Anzeigewerk 41 ist über Lagerböcke 65 an der Haube 21 gelagert.

Die druckfeste Platte 26 ist mit einer vorzugsweise zylindrischen, topfförmigen Ausstülpung 50 in die Getriebekammer 27 hinein versehen, die einen oberen Lagerstift 51 und einen unteren Lagerstift 52 trägt. Letzterer nimmt den Lageransatz des antreibenden Elements 53 einer Magnetkupplung auf, das gleichfalls topfförmig ausgebildet ist. Der obere Lagerstift 51 trägt das angetriebene Element 54 der Kupplung. Mindestens in einander radial gegenüberliegenden Bereichen sind die Elemente 53,54 mit Magneten versehen, die nach bekannten Grundsätzen zur Wirkung einer Drehkupplung der beiden Elemente führen. Diese können beispielsweise aus einem Kunststoffmaterial geformt sein, das mit Magnetpulver angereichert ist. In diesem Fall enthält das antreibende Element 53 in seiner gesamten topfförmigen Erstreckung ferromagnetisches Material, das außerhalb des für die Kupplung notwendigen Bereichs vorzugsweise nicht magnetisiert ist, um nicht unerwünschte Manipulationsmöglichkeit zu bieten. In diesem übrigen Bereich dient das ferromagnetische Material nur zur Abschirmung des angetriebenen Kupplungselements gegenüber von außen möglicherweise zu Manipulationszwecken einwirkenden Magnetfeldern. Das antreibende Kupplungselement 53 ist im übrigen gegenüber Manipulationsversuchen wenig empfindlich, weil infolge der hohen vorgeschalteten Untersetzung, die im allgemeinen größer ist als 100:1, ein hinreichendes Drehmoment zur Verfügung steht.

Falls das antreibende Kupplungselement 53 lediglich in denjenigen Bereichen mit Magneten ausgerüstet ist, die dem anzutreibenden Kupplungselement radial gegenüberliegen, wird es im übrigen Bereich mit anderen ferromagnetischen Teilen zur Abschirmung ausgerüstet.

Der untere Lagerstift 52 dient nicht nur zur radialen Lagerung des antreibenden Kupplungselements 53, sondern positioniert dies in einer Richtung auch axial. In der anderen Richtung wird es positioniert durch das Zusammenwirken seines vorzugsweise mit einer runden oder spitzen Lagerkuppe 55 versehenen Stirnendes mit einer als Gegenfläche vorgesehenen Teilfläche der Platine 6.

Das angetriebene Kupplungselement 54 ist auf dem oberen Kupplungsstift 51 radial gelagert und in einer Axialrichtung auch durch Zusammenwirken mit dem Ende des Lagerstifts 51 positioniert. Am oberen Ende ist es auf einem weiteren Lagerstift radial und axial gelagert, der von einer mit dem Zählwerksgehäuse 12 oder der Platte 26 in vorbestimmter Winkelposition verbundenen Lagerplatte 62 ausgeht. Es trägt auf der Seite der Anzeigekammer einen Ring 56, der zweckmäßigerweise aus ferromagnetischem Material besteht oder solches Material enthält, um auch von der offenen Seite des durch das antreibende Element 53 gebildeten Abschirmungstopfes her eine magnetische Abschirmung des angetriebenen Elements zu bewirken.

Weiterhin kann das Zählwerksgehäuse 12 in dem manipulationsgefährdeten Bereich der Kupplung mit einem zusätzlichen Abschirmungsmantel 58 versehen sein, und zwar vorzugsweise auf seiner trockenen Seite.

Das Abtriebsritzel 59 des angetriebenen Kupplungselements 54 überträgt seine Drehbewegung auf ein Zahnrad 60, dessen Achse 61 koaxial zu der Haube 21 gelagert ist. Im dargestellten Beispiel wird die Lagerung einerseits von der Platte 26 und andererseits von der Lagerplatte 62 gebildet. Falls Platz dafür vorhanden ist, könnte auch die Haube 21 zur Lagerung herangezogen werden. Jedes dieser Elemente wäre auch für sich alleine im Prinzip zur Lagerung der Welle 61 geeignet.

Die Welle 61 gibt die ihr durch das Rad 60 erteilte Drehung über eine Zahnscheibe 63, die auch der Anzeige dienen kann, an ein Ritzel 64 weiter, das den Rollenblock 41 antreibt. Im dargestellten Beispiel haben die Räder 60 und 63 sowie die Ritzel 59 und 64 je gleichen Durchmesser und sind die Ritzel 59,64 koaxial angeordnet. Dies ist aber nicht erforderlich. Vielmehr kann man an dieser Stelle eine weitere Über- oder Untersetzung vornehmen zur Anpassung an unterschiedliche Meßwerke, unterschiedliche Meßeinheiten oder unterschiedliche Anwendungsbereiche. Eine Rückwirkung auf die Meßgenauigkeit, insbesondere auf das Anlaufmoment, ist davon in Anbetracht der starken vorgeschalteten Untersetzung nicht zu befürchten. Das Ritzel 64 ist ebenso wie das Anzeigewerk 41 an der Haube 21 gelagert. Axial stützt es sich einerseits an dem es tragenden, haubenseitigen Lagerstift und andererseits an der Lagerplatte 62 ab.

Das erfindungsgemäß wichtige Merkmal dieser Anordnung besteht darin, daß in der Bewegungstransmission von dem angetriebenen Kupplungselement 54 zum Anzeigewerk 41 eine Welle 61 koaxial mit der Haube 21 angeordnet ist. Dadurch wird nämlich die Möglichkeit geschaffen, die Haube 21 zusammen mit dem Anzeigewerk 41 gegenüber dem Meßwerksgehäuse 1 und dem Zählwerksgehäuse 12 zu verdrehen, obwohl eine exzentrische Bewegungsübertragung vom Getriebe zum Anzeigewerk vorgesehen ist. Die Verdrehung der Haube stößt somit nicht auf den Reibwiderstand einer Dichtung, die gegenüber dem vollen Mediumsdruck abdichten muß. Lediglich der Reibwiderstand der Einrichtungen, die den Rand 20 der Haube 21 mit dem Zählwerksgehäuse 12 verbinden, sowie des Dichtrings 44 ist zu überwinden. Es ist hingegen nicht unbedingt erforderlich, daß die Achsen der Räder 60,63 sowie der Haube 21 koaxial sind mit der Achse des Zählwerksgehäuses 12; jedoch ist dies offensichtlich vorteilhaft. Mindestens sollte die gemeinsame Achse der Haube 21 und der Räder 60,63 nach der Mittelachse ("mittennah") des Zählwerksgehäuses 12 gelegen sein.

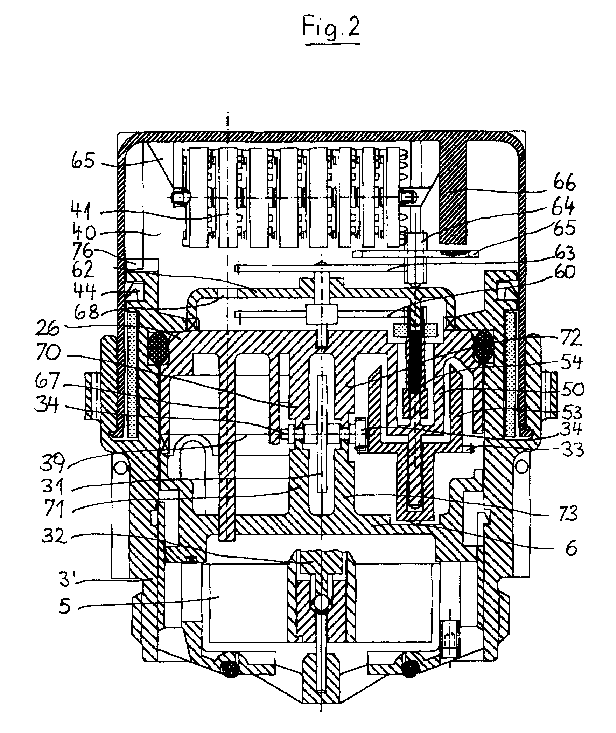

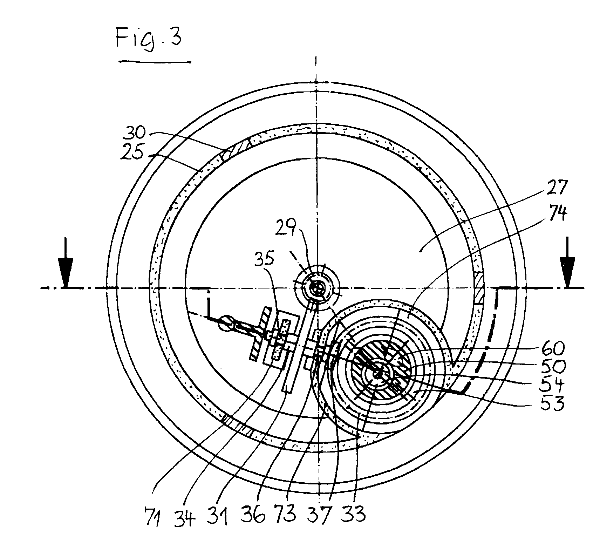

Die Ausführungsform gemäß Fig. 2 und 3 unterscheidet sich von derjenigen gemäß Fig. 1 durch die im folgenden beschriebenen Merkmale.

Die Strömungsführung im Meßwerksgehäuse 3' ist koaxial. Dies zeigt, daß die Erfindung in Verbindung mit unterschiedlichsten Meßwerken verwendet werden kann.

Das Räderwerk im Getriebe 28 der zuvor erläuterten Ausführung ist ersetzt durch eine statt eines Ritzels an der Flügelradwelle 32 vorgesehene Schnecke 29 und ein Schneckenrad 31, dessen Ritzel 37 auf ein mit dem antreibenden Element 53 der Magnetkupplung verbundenes Kronrad 33 einwirkt. Die Welle 34 des Schneckenrads 31 ist in Lagern 35,36 gelagert, die in der durch Punktierung in Fig. 3 hervorgehobenen Teilungsfuge 39 der von der Platte 26 und der Platine 6 paarweise entgegengesetzt ausgehenden Pfosten 70,71 und Wänden 72,73 gebildet sind. Die Wand 72,73 erstreckt sich etwa kreisförmig rings um die Magnetkupplung 50,53,54 und bildet für diese eine im wesentlichen geschlossene Kammer 74, die nur durch den engen Spalt des Lagers 36 mit dem übrigen Teil 27 der Getriebekammer in Verbindung steht. Da durch diesen Spalt kein nennenswerter Flüssigkeitsaustausch stattfindet, ist nicht damit zu rechnen, daß im Medium enthaltene ferromagnetische Teilchen den Weg zur Magnetkupplung finden.

Das Ritzel 64, das die Bewegung von dem zur Haube 21 konzentrisch gelagerten Zahnrad 63 auf das Anzeigewerk 41 überträgt, ist mit einer Scheibe 65 verbunden, die als sogenannte Zehntelliterscheibe Markierungen trägt, die durch einen bis zu ihr herabreichenden Beobachtungszapfen 66 an der Haube 21 abgelesen werden können. Dieser Zapfen ist glasklar. Seine Unterfläche kann poliert und mit einer Ablesemarke versehen sein.

Ein ähnlicher Beobachtungszapfen 67 geht von der druckfesten Wand 26 aus und reicht durch die Platine 6 hindurch in die Nähe des Flügelrads 5 und gestattet durch eine Öffnung 68 der Lagerplatte 62 hindurch die Beobachtung der Flügelradbewegung. Mindestens der Beobachtungszapfen 67 besteht aus glasklarem Material. Zweckmäßigerweise gilt dies für die gesamte druckfeste Platte 26.

Damit nicht durch vielfaches Drehen der Haube 21 das Meßergebnis manipuliert werden kann, sind zweckmäßigerweise am Zählwerksgehäuse 12 einerseits und der Haube 21 andererseits zusammenwirkende Anschläge 76 vorgesehen, die den Verdrehwinkel auf weniger als 360° beschränken.

In Fig. 3 erkennt man das äußere Kupplungselement 53, das innere Kupplungselement 54 sowie die dazwischen befindliche, von der Wand 26 gebildete Trennwand 50 (durch Schraffur kenntlich gemacht). Innerhalb dieser Wand 50 erkennt man eine ovale Kontur 60, bei der es sich um den Umriß eines achsparallel in die Wand 50 eingeformten, unten geschlossenen und zur Anzeigekammer offenen Kanals handelt, der auch eine andere als die dargestellte ovale Querschnittskontur haben kann. Er dient zur Aufnahme eines magnetfeldempfindlichen Sensors, beispielsweise eines Reed-Relais. Der Kanal 60 ist so ausgebildet, daß dieser Sensor sich in dem Wirkungsfeld der Kupplungsmagneten befindet. Man erwirbt so den Vorteil, daß die Umdrehung der Kupplungsteile auf einfache Weise von der trockenen Seite der Anordnung her abgetastet werden kann, und zwar vorzugsweise mit passiven Sensoren, die keine eigene Stromversorgung des Geräts verlangen.

Man wird im allgemeinen nach weitgehend konzentrischer Anordnung der Kupplungsteile 53,54 zueinander streben. Wie Fig. 3 zeigt, besteht aber die Möglichkeit, sie ein wenig exzentrisch anzuordnen, um an einer Umfangsstelle hinreichenden radialen Platz für die Unterbringung des Kanals 60 zu schaffen.

Wenn das äußere Streufeld des antreibenden Kupplungselements 53 stark genug ist, kann man den Sensor auch radial außerhalb dieses Kupplungselements und diesem benachbart in einem gesondert von der druckfesten Platte 26 her hinabgeführten Kanal unterbringen.

## Patentansprüche

1. Wasserzähler mit einem das Meßsignal als Umdrehung einer Welle (32) abgebenden Meßwerk, einem sich an die Welle (32) anschließenden Getriebe (28), das sich in einer von Medium und Mediumsdruck beaufschlagten Getriebekammer (27) befindet, und einem Anzeigewerk (41), das sich in einer von der Getriebekammer (27) durch eine Wand (26) dicht getrennten Anzeigekammer (40) befindet und von dem Getriebe (28) über eine exzentrisch gelegene, abgedichtete Antriebsverbindung (53,54) angetrieben ist, dadurch gekennzeichnet, daß dem Anzeigewerk (41) in der Anzeigekammer (40) mindestens ein mittennah gelagertes Zwischenrad (60,63) vorgeschaltet ist und die Haube (21) der Anzeigekammer (40) mit dem Anzeigewerk (41) gegenüber der Getriebekammer (27) um eine Achse drehverstellbar ist, die mit der Achse des Zwischenrads (60,63) zusammenfällt.

2. Wasserzähler nach Anspruch 1, dadurch gekennzeichnet, daß die Anzeigekammer (40) trocken und drucklos und die Wand (26) zwischen der Getriebekammer (27) und der Anzeigekammer (40) druckfest ausgebildet ist.

3. Wasserzähler nach Anspruch 2, dadurch gekennzeichnet, daß die Antriebsverbindung von einer Magnetkupplung gebildet ist.

4. Wasserzähler nach Anspruch 3, dadurch gekennzeichnet, daß im Wirkungsbereich des Magnetfelds der Magnetkupplung (53,54) und insbesondere in dieser ein magnetfeldempfindlicher Geber angeordnet ist.

5. Wasserzähler nach einem der Ansprüche 3 oder 4, dadurch gekennzeichnet, daß das antreibende Element (53) der Magnetkupplung das angetriebene Element (54) abschirmend umgibt.

6. Wasserzähler nach Anspruch 5, dadurch gekennzeichnet, daß das antreibende und abschirmende Element (53) der Magnetkupplung topfförmig ausgebildet ist.

7. Wasserzähler nach Anspruch 5 oder 6, dadurch gekennzeichnet, daß an der bezüglich der Abschirmung offenen Seite der Magnetkupplung (53,54) eine abschirmende, ferromagnetische Scheibe (56) vorgesehen ist.

8. Wasserzähler nach Anspruch 7, dadurch gekennzeichnet, daß die Scheibe (56) von dem angetriebenen Element (54) oder dessen Welle getragen ist.

9. Wasserzähler nach einem der Ansprüche 6 bis 8, dadurch gekennzeichnet, daß die druckfeste Wand (26) eine topfförmige Auswölbung (50) in die Getriebekammer (27) aufweist, die von dem topfförmigen antreibenden Element (53) umgeben ist und das angetriebene Element (54) umgibt.

10. Wasserzähler nach Anspruch 9, dadurch gekennzeichnet, daß die topfförmige Auswölbung (50) einen Lagerstift (52) für das antreibende Element trägt, das mit einer dem Lagerstift gegenüberliegenden Platine ein Drucklager bildet.

11. Wasserzähler nach einem der Ansprüche 1 bis 10, dadurch gekennzeichnet, daß ein das Getriebe (28) und die druckfeste Platte (26) sowie mindestens einen Teil der Anzeigekammer (40) einschließendes Gehäuse (12) eine ferromagnetische Abschirmung (58) umfaßt.

12. Wasserzähler nach Anspruch 11, dadurch gekennzeichnet, daß die druckfeste Platte (26) ganz oder teilweise durchsichtig ist und wenigstens ein Rad des Getriebes (28) mit Ablese- oder Abtastmarkierung versehen ist.

13. Wasserzähler nach einem der Ansprüche 1 bis 12, dadurch gekennzeichnet, daß die Magnetkupplung (53,54) mit einer Über- oder Untersetzung ausgerüstet ist.

14. Wasserzähler nach einem der Ansprüche 1 bis 13, dadurch gekennzeichnet, daß die Wand (26) einen aus optisch klarem Material bestehenden, in die Nähe des Flügelrads (5) reichenden Beobachtungszapfen (67) aufweist.

15. Wasserzähler nach einem der Ansprüche 1 bis 14, dadurch gekennzeichnet, daß die Haube (21) einen aus optisch klarem Material bestehenden, in die Nähe einer Zehntelliterscheibe (65) reichenden Beobachtungszapfen (66) aufweist.

16. Wasserzähler nach einem der Ansprüche 1 bis 15, dadurch gekennzeichnet, daß sich das antreibende Element (53) der Magnetkupplung in einer von der übrigen Getriebekammer (27) bis auf einen engen Durchgang (36) abgeteilten Kupplungskammer (74) befindet.

17. Wasserzähler nach Anspruch 16, dadurch gekennzeichnet, daß der enge Durchgang ein Wellendurchgang (37) mit quer zur Kupplungsachsrichtung verlaufender Richtung ist.

18. Wasserzähler nach Anspruch 16 oder 17, dadurch gekennzeichnet, daß sich der enge Durchgang (36) in der Teilung (39) eines Getriebegehäuses (6,25,26) befindet.

19. Wasserzähler nach Anspruch 17 oder 18, dadurch gekennzeichnet, daß das Getriebe ein Schneckenrad (31) umfaßt und dessen Welle (34) durch den Wellendurchgang (36) tritt.

20. Wasserzähler nach einem der Ansprüche 17 bis 19, dadurch gekennzeichnet, daß die Welle (34) in dem Wellendurchgang (36) gelagert ist.
